# EUROPEAN PATENT APPLICATION

(11) **EP 3 162 767 A1**
(43) Date of publication of application: **03.05.2017**
(21) Application number: 15812377.8
(22) Date of filing: 24.06.2015
(51) Int. Cl.: C02F 1/28, B01D 63/02, C02F 1/44, C02F 101/12

(54) **WATER PURIFIER-USE CARTRIDGE**

(30) Priority: 24.06.2014 JP 2014129296
(71) Applicant: Mitsubishi Rayon Co., Ltd., Tokyo 100-8253 (JP)
(72) Inventor: KAWAI, Yoshinobu, Toyohashi-shi Aichi 440-8601 (JP); SUZUKI, Satoshi, Toyohashi-shi Aichi 440-8601 (JP); KOBAYASHI, Yukio, Nukata-gun Aichi 444-0103 (JP); KIMURA, Shouzou, Tokyo 100-8253 (JP); KATO, Tatsuhiro, Toyohashi-shi Aichi 440-8601 (JP); HONJOU, Kenji, Tokyo 100-8253 (JP)
(74) Representative: Hoffmann Eitle
(86) International application number: PCT/JP2015/068273
(87) International publication number: WO 2015/199161

(57) **Abstract**

Provided is a water purifier-use cartridge having a slim structure having a small outer diameter and also a favorable water purifying function. The water purifier-use cartridge includes a container main body (2) having a filtering medium container (4) and a lid portion (5) bonded to the opening end side of the filtering medium container and a filtering medium (3) accommodated in the filtering medium container. The lid portion (5) is provided with a water intake port and a water discharge port, a first water passage (8) communicating with the water intake port is formed on an outer side of the filtering medium (3) in the filtering medium container (4). The filtering medium (3) is constituted at least by molded activated carbon (9) at least having a second water passage in an interior and a hollow fiber membrane (10) is configured so as to in touch with the second water passage. The molded activated carbon (9) and the hollow fiber membrane (10) are disposed along a central axis direction of the filtering medium container, the water purifier-use cartridge is configured such that water flows from the first water passage to the second water passage through the molded activated carbon (4), and a ratio (L/d) of a length (L) of the container main body (2) to a maximum diameter (d) of the container main body is set to 2.4 or more and 4.3 or less.

## Description

### TECHNICAL FIELD

The present invention relates to a water purifier-use cartridge.

This application is based upon and claims the benefit of priority of the prior Japanese Patent Application No. 2014-129296 filed in Japan on June 24, 2014, the entire contents of which are incorporated herein by reference.

### BACKGROUND ART

Hitherto, water purifiers for removing impurities such as chlorine contained in tap water have been widely spread. As an installation form of the water purifier, a tap direct attachment type to be attached to the tap of a water faucet, a stationary type to be installed on a sink, or an under sink type (built-in type) to be installed in a storage cabinet under the sink, and the like are known.

As such a water purifier, for example, a water purifier-use cartridge is proposed in Patent Literature 1 in which a decrease in flow rate is not caused while effectively thoroughly utilizing an entire filtering medium by dividing the flow of a fluid to pass through the filtering medium into at least two directions by an outside spacer and an inside spacer. In addition, a cartridge for water purification is proposed in Patent Literature 2 in which an adsorbent molded body configured to allow water to flow from an outer peripheral portion to an internal water passage and a hollow fiber membrane are linearly arranged in a tube central axis direction.

However, under sink type water purifiers attract attention since the aesthetic appearance around the sink is not impaired especially in the case of water purifiers to be used in homes. In addition, it has become mainstream to install a drawer body in the storage cabinet space below the system kitchen in recent years, and the under sink type water purifier thus tends to be disposed in the space which is a dead space in the under sink and in which exchange of the cartridge is easily performed, such as a narrow space in the storage cabinet, the space between the upper and lower parts of a drawer, or the back of a drawer but not on a tiered platform on the back side of the prior art. Accordingly, as an under sink type water purifier, a water purifier-use cartridge to have a water purifying function, namely, water purifying performance equivalent to one of the prior art and a flow rate for filtration and also a slim structure having a small outer diameter so that it can be disposed in the dead space is desired.

### CITATION LIST

### PATENT LITERATURE

Patent Literature 1: JP 2008-279450 A
Patent Literature 2: JP 2002-346550 A

### SUMMARY OF THE INVENTION

### PROBLEM TO BE SOLVED BY THE INVENTION

However, in the water purifier-use cartridge of Patent Literature 1, a water channel is formed as uneven packing of the activated carbon is caused in the interior unless granular activated carbon to be used as a filtering medium is uniformly close-packed and a so-called short pass that water is not treated with the filtering medium is thus caused and it is thus difficult to obtain favorable water purifying performance. Incidentally, it is conceivable to have a shape that is thin in the radial direction and elongated in the axial direction (longitudinal direction) in order to thin the cartridge, but the pressure loss increases as the cross-sectional area of the granular activated carbon layer decreases and a desired flow rate for filtration is thus not obtained. In addition, it is also conceivable to increase the water purifying performance by decreasing the particle diameter of granular activated carbon to be used, but a desired flow rate for filtration is not obtained due to an increase in pressure loss in that case as well. In addition, members such as the outside spacer and the inside spacer are required in order to obtain a desired flow rate for filtration and the number of manufacturing steps and the number of parts thus increase so that it is costly and disadvantageous in terms of industrial production. Furthermore, the outer container and the bottom lid are assembled by screwing a bolt into a nut to screw together, and the outer diameter of the container is thus sufficiently larger than the inner diameter at the screwing portion so that a protruding portion is formed on a part of the container and the slimness of the whole is impaired.

In the cartridge for water purification of Patent Literature 2, the amount of filtering medium is small and it is thus required to frequently exchange the cartridge in association with clogging in a short term and deterioration in performance and it greatly takes time and effort to maintain the cartridge. In addition, it is conceivable to increase the packing density of the adsorbent molded body in order to improve the purifying performance, but a desired flow rate for filtration is not obtained due to an increase in pressure loss and further a desired flow rate for filtration is not obtained due to clogging of the adsorbent molded body itself although the purifying performance per unit volume increases.

The invention has been made in view of the above circumstances, and an object thereof is to provide a water purifier-use cartridge having a slim structure having a small outer diameter and also a favorable water purifying function.

### MEANS FOR SOLVING PROBLEM

The water purifier-use cartridge according to an embodiment of the invention includes a container main body having a tubular filtering medium container and a lid portion provided on an opening end side of the filtering medium container and a filtering medium accommodated in the filtering medium container, and in the water purifier-use cartridge, the container main body is provided with a water intake port and a water discharge port, a first water passage communicating with the water intake port is formed on an outer side of the filtering medium in the filtering medium container, the filtering medium is constituted at least by activated carbon at least having a space constituting a second water passage in an interior and a hollow fiber membrane configured so as to be in touch with the second water passage, the hollow fiber membrane is disposed downstream the activated carbon, the water purifier-use cartridge is configured such that water flows from the first water passage to the second water passage through the activated carbon, and a ratio (L2/L1) of a length (L2) of the activated carbon to a length (L1) of the hollow fiber membrane accommodated in the filtering medium container is from 2.0 to 4.0.

This water purifier-use cartridge is configured such that water is allowed to flow from the first water passage on the outer side of the molded activated carbon to the second water passage in the interior thereof and the hollow fiber membrane is in touch with the second water passage, and it is thus possible to obtain a favorable water purifying function by allowing the molded activated carbon and the hollow fiber membrane to efficiently function. Furthermore, when the water purifier-use cartridge is horizontally placed, a water channel is formed since it is difficult to close-pack granular activated carbon, but it is possible to obtain favorable water purifying performance since a water channel is hardly formed in the case of molded activated carbon. In addition, according to this configuration, it is possible to increase the filtering area of the molded activated carbon since the length along the central axis direction of the molded activated carbon is set to be longer as compared to the length of the hollow fiber membrane, a favorable water purifying function is thus obtained even if the water purifier-use cartridge is thinned by decreasing the thickness in the radial direction of the molded activated carbon, namely, the thickness between the first water passage and the second water passage.

The water purifier-use cartridge according to another embodiment of the invention includes a container main body having a tubular filtering medium container and a lid portion provided on an opening end side of the filtering medium container and a filtering medium accommodated in the filtering medium container, and in the water purifier-use cartridge, the container main body is provided with a water intake port and a water discharge port, a first water passage communicating with the water intake port is formed on an outer side of the filtering medium in the filtering medium container, the filtering medium is constituted at least by activated carbon at least having a space constituting a second water passage in an interior and a hollow fiber membrane configured so as to be in touch with the space constituting a second water passage, the hollow fiber membrane is disposed downstream the activated carbon, the water purifier-use cartridge is configured such that water flows from the first water passage to the second water passage through the activated carbon, and an effective volume of the activated carbon with respect to an effective membrane area of the hollow fiber membrane is from 600 to 800 cc/m².

In addition, in the water purifier-use cartridge, it is preferable that a ratio (L/d) of a length (L) of the container main body to a maximum diameter (d) of the container main body is 2.4 or more and 5.0 or less.

In addition, in the water purifier-use cartridge, it is preferable that the activated carbon and the hollow fiber membranes are disposed along a central axis direction of the filtering medium container.

In addition, in the water purifier-use cartridge, it is preferable that a passage cross-sectional area of the first water passage is from 1.0 to 8.0 cm².

In addition, in the water purifier-use cartridge, it is preferable that an average value of the passage cross-sectional area of the first water passage is from 3.0 to 6.0 cm².

In addition, in the water purifier-use cartridge, it is preferable that a mass of the molded activated carbon with respect to an effective membrane area of the hollow fiber membrane is from 200 to 400 g/m².

According to this configuration, a favorable water purifying function is obtained.

In addition, in the water purifier-use cartridge, it is preferable that a rib is radially provided from an inner center portion of the lid portion.

In addition, in the water purifier-use cartridge, it is preferable that a concave positioning is provided at an inner center portion of the lid portion.

In addition, in the water purifier-use cartridge, it is preferable that the container main body is provided with an identification means to distinguish the water intake port from the water discharge port.

In addition, in the water purifier-use cartridge, it is preferable that an amount of gap other than the fitting portion between the inner bottom face of the lid portion and the top face of the filtering medium is from 2.0 to 4.0 mm.

In addition, in the water purifier-use cartridge, it is preferable that the filtering medium container and the lid portion are bonded to each other.

In addition, in the water purifier-use cartridge, it is preferable that the lid portion is provided with a water intake port and a water discharge port.

In addition, in the water purifier-use cartridge, it is preferable that a protruding portion in a radial direction of the filtering medium container and the lid portion has a cylindrical shape of 9.0 mm or less.

In addition, in the water purifier-use cartridge, it is preferable that the activated carbon is molded activated carbon.

The under sink type water purifier according to an embodiment of the invention uses the water purifier-use cartridge described in any one of the above.

In addition, in another aspect of the water purifier-use cartridge according to the embodiments of the invention, the water purifier-use cartridge includes a container main body having a bottomed tubular filtering medium container and a lid portion bonded to the opening end side of the filtering medium container and a filtering medium accommodated in the filtering medium container, and in the water purifier-use cartridge, the lid portion is provided with a water intake port and a water discharge port, a first water passage communicating with the water intake port is formed on an outer side of the filtering medium in the filtering medium container, the filtering medium is constituted at least by molded activated carbon at least having a second water passage in an interior and a hollow fiber membrane is configured so as to in touch with the second water passage, the molded activated carbon and the hollow fiber membrane are disposed along a central axis direction of the filtering medium container, the water purifier-use cartridge is configured such that water flows from the first water passage to the second water passage through the molded activated carbon, and a ratio (L/d) of a length (L) of the container main body to a maximum diameter (d) of the container main body is set to 2.4 or more and 4.3 or less.

In this water purifier-use cartridge, the molded activated carbon and hollow fiber membrane as the filtering medium are disposed along the central axis direction of the filtering medium container, and the water purifier-use cartridge can thus have a slim structure in which the ratio (L/d) of the length (L) of the container main body to the maximum diameter (d) of the container main body is 2.5 or more and 4.5 or less. In addition, the water purifier-use cartridge is configured such that water is allowed to flow from the first water passage on the outer side of the molded activated carbon toward the second water passage in the interior thereof and further the hollow fiber membrane is configured so as to in touch with the second water passage, and it is thus possible to obtain a favorable water purifying function by allowing the molded activated carbon and the hollow fiber membrane to efficiently function. Furthermore, when the water purifier-use cartridge is horizontally placed, a water channel is formed since it is difficult to close-pack granular activated carbon, but it is possible to obtain favorable water purifying performance since a water channel is hardly formed in the case of molded activated carbon.

In addition, in another aspect of the water purifier-use cartridge, it is preferable that an effective volume of the molded activated carbon with respect to an effective membrane area of the hollow fiber membrane is from 600 to 800 cc/m².

According to this configuration, a favorable water purifying function is obtained.

### EFFECT OF THE INVENTION

According to the water purifier-use cartridge of the invention, the cartridge can be easily disposed, for example, even in a narrow space in the under sink without being limited by the placement manner since it has a slim structure and also a favorable water purifying function.

### BRIEF DESCRIPTION OF DRAWINGS

Fig. 1A is a front view of an outline drawing of an embodiment of a water purifier-use cartridge according to the invention;
Fig. 1B is a side view of one side of an outline drawing of an embodiment of the water purifier-use cartridge according to the invention;
Fig. 2 is a cross-sectional view illustrating the overall configuration of the water purifier-use cartridge illustrated in Fig. 1A and Fig. 1B;
Fig. 3 is a view illustrating the inner face of the bottom portion of a filtering medium container viewed in the direction of arrows A-A in Fig. 2;
Fig. 4 is a graph illustrating the results of a flux test; and
Fig. 5 is a graph illustrating the results of a chloroform filtering test.

### MODE(S) FOR CARRYING OUT THE INVENTION

Hereinafter, the water purifier-use cartridge according to the invention will be described in detail with reference to the drawings.

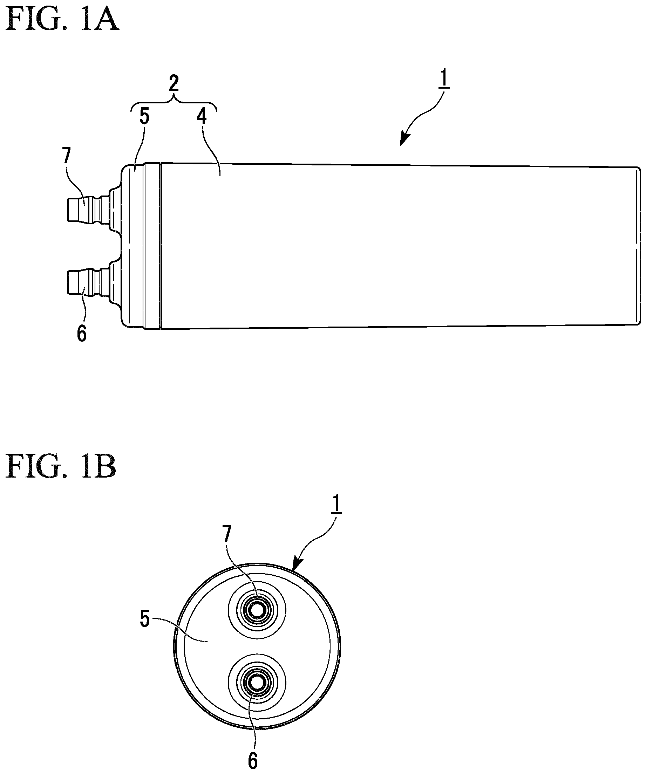

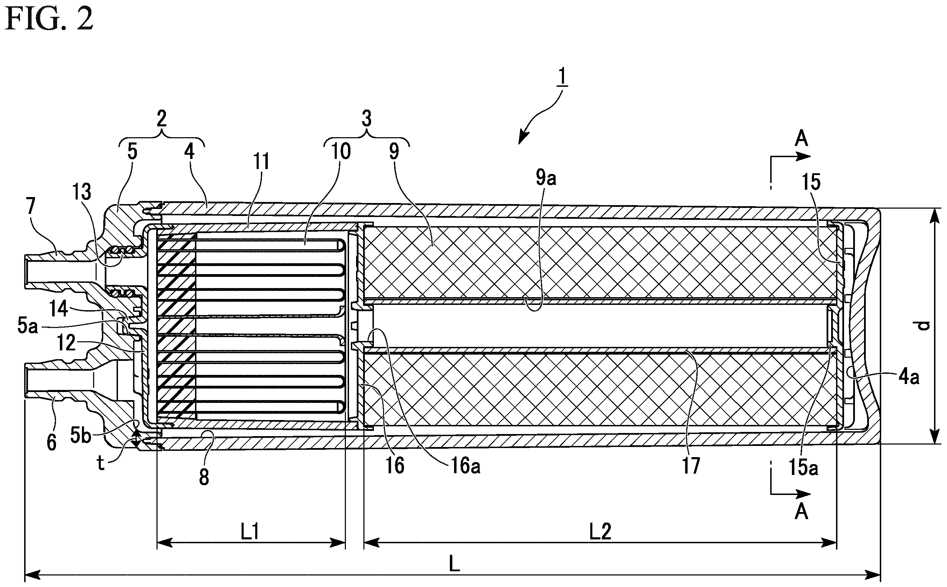

Fig. 1A and Fig. 1B are an outline drawing of an embodiment of the water purifier-use cartridge according to the invention, and Fig. 1A is the front view and Fig. 1B is the side view of one side. Fig. 2 is a cross-sectional view illustrating the overall configuration of the water purifier-use cartridge illustrated in Fig. 1A and Fig. 1B. In these drawings, the reference numeral 1 denotes the water purifier-use cartridge (hereinafter simply referred to as the "cartridge 1"), and this cartridge 1 is constituted by a container main body 2 and a filtering medium 3 accommodated in the container main body 2.

As illustrated in Fig. 2, the container main body 2 has a bottomed cylindrical filtering medium container 4 and a lid portion 5 bonded to the opening side of the filtering medium container 4. The filtering medium container 4 is formed of a thermoplastic resin to have a burst pressure of 2.0 MPa or more. As a thermoplastic resin that is a material for forming the filtering medium container 4, an ABS resin is suitably used since it exhibits particularly excellent pressure resistance and moldability. It is possible to have a burst pressure of 2.5 MPa or more in the case of using an ABS resin.

The lid portion 5 is a substantially disc-shaped one to cover the opening of the filtering medium container 4, it is formed of a hard resin, and the outer peripheral end of the lid portion 5 is fixed to the opening side peripheral end of the filtering medium container 4 by ultrasonic welding, vibration welding, or the like.

When welding the lid portion 5 with the filtering medium container 4 by ultrasonic welding, it is possible to use the shape of a welding joint such as a shear joint or a butt joint. Among them, it is preferable to use a share joint. In the shear joint, the contact surface of the joint and the vibration direction approach in the same direction with respect to the longitudinal vibration of the horn, and bubbles are hardly formed on the welded surface. Accordingly, it is possible to obtain the container main body 2 exhibiting excellent watertightness and airtightness. Specifically, a horn for ultrasonic welding is put from the side of the water intake joint 6 and the water discharge joint 7 and vibration (longitudinal vibration) in the length L direction to be described later is applied thereto to weld the joint part. However, in the case of a slim structure having a small outer diameter as in the present embodiment, the longitudinal vibration for ultrasonic welding is transmitted to the shell part of the filtering medium container 4 and the welding strength thus drops. Hence, it is possible to further increase the welding strength by having the shape of a shear joint provided on the edge so that the welded part of the lid portion 5 sandwiches the glued part of the filtering medium container 4.

It is preferable to weld the lid portion 5 with the filtering medium container 4 by vibration welding from the viewpoint of watertightness and airtightness. In the case of longitudinal vibration as in ultrasonic welding, the two glued surfaces are melted in a state in which they are not completely in close contact with each other, and bubbles and impurities are likely to be mixed and the sealing property is likely to be impaired. Meanwhile, vibration welding is transverse vibration, and the vibrating surface and the glued surface are thus in the same direction and the welded surfaces can be brought into close contact with each other without being exposed to air. Accordingly, it is possible to obtain the container main body 2 exhibiting favorable watertightness and airtightness. On the other hand, the apparatus for vibration welding is expensive and vibration welding requires a longer time for welding, and it is thus preferable to use ultrasonic welding from the viewpoint of production efficiency.

The water intake joint 6 and the water discharge joint 7 are formed on the outer face side of this lid portion 5 as illustrated in Fig. 1A, Fig. 1B, and Fig. 2. The water intake joint 6 is a tubular one configured so as to be fluid-tightly connected to the IN hose (coupler for water intake), and the internal hole thereof serves as the water intake port according to the invention. The water discharge joint 7 is a tubular one configured so as to be fluid-tightly connected to the OUT hose (coupler for water discharge), and the internal hole thereof serves as the water discharge port according to the invention.

In the case of a slim structure having a small outer diameter as in the present embodiment, when the lid portion 5 on which the water intake joint 6 and the water discharge joint 7 are formed has a configuration in which the lid portion 5 is fixed so as to cover the opening of the filtering medium container 4, the stress is concentrated to a shoulder portion 5b on the inner side of the lid portion 5 when a pressure is applied from the water intake joint 6, and the shoulder portion 5b is likely to be the starting point of destruction. Hence, it is preferable that the wall thickness t from the inner shoulder portion 5b of the lid portion 5 to the outer wall of the side face of the lid portion 5 is designed to be about from 4 to 6 mm in order to enhance the pressure resisting performance of the cartridge 1. The pressure resisting performance decreases and the cartridge 1 is thus destroyed in some cases when the wall thickness t is smaller than 4 mm. In addition, the step difference between the lid portion 5 and the welded part is eliminated when the wall thickness is larger than 6 mm, and there is thus a possibility that a sink mark is formed when molding and a poor appearance is caused.

In the present embodiment, the water intake joint 6 and the water discharge joint 7 are symmetrically disposed to take the central axis of the container main body 2 between them as illustrated in Fig. 1B. In addition, they are not disposed on the peripheral edge side of the lid portion 5 but disposed on the center side thereof. This makes it possible to dispose the horn so as to face the respective peripheral end portions of the lid portion 5 and the filtering medium container 4 without being interfered by the water intake joint 6 and the water discharge joint 7 when the horn (not illustrated) of the ultrasonic device is disposed from the outer side of the lid portion 5 toward the filtration container 4 in order to ultrasonically weld the lid portion 5 to the peripheral end on the opening side of the filtering medium container 4 as described above.

As illustrated in Fig. 2, the internal hole (water intake port) of the water intake joint 6 communicates with the space between the filtering medium container 4 and the filtering medium 3 accommodated in the filtering medium container 4, namely, a first water passage 8 formed on the outer side of the filtering medium 3. In addition, the internal hole (water discharge port) of the water discharge joint 7 communicates with the end portion side, namely, the opening side of the hollow fiber membrane to be described later.

Here, the container main body 2 has the entire length L, namely, the length L from the tip of the water intake joint 6 or water discharge joint 7 to the bottom face of the filtering medium container 4 of, for example, about from 220 mm to 300 mm and preferably about from 250 mm to 280 mm. The handleability is impaired or the installation place is limited when the length L is 300 mm or more. In addition, the required amount of filtering medium cannot be packed, thus the filtering ability decreases, and the practicality decreases when the length L is shorter than 220 mm. In addition, the maximum diameter of the container main body 2 is about from 70 to 90 mm and preferably about from 75 to 80 mm. The handleability is impaired or it is difficult to install the cartridge in a narrow space or the like when the maximum diameter exceeds 90 mm, thus the installation place is limited and the versatility decreases. In addition, the required amount of filtering medium cannot be packed, thus the filtering ability decreases, and the practicality decreases when the maximum diameter is 70 mm or less. Accordingly, the ratio (L/d) of the length (L) of the container main body 2 to the maximum diameter (d) of the container main body 2 is set to 2.4 or more and 5 or less, preferably 2.4 or more and 4.3 or less, and even more preferably 3.0 or more and 4.0 or less. It is impossible to obtain sufficient water purifying performance when L/d is smaller than 2.4, and the cartridge does not have a slim structure and cannot be thus easily disposed in, for example, a narrow space in the under sink when L/d is larger than 5.

The inner side of the filtering medium container 4 is provided with a draft angle in order to easily take out the filtering medium container 4 from the mold. The draft angle is preferably from 0.3° to 1.0° and more preferably 0.5°. The amount of filtering medium decreases and the target performance cannot be obtained when the draft angle exceeds 1.0°, and it is thus required to increase the maximum diameter and the amount of filtering medium. The releasability deteriorates and a possibility to be accompanied with damage of the surface, deformation, and the like at the time of releasing increases when the draft angle is smaller than 0.3°. In addition, it is desirable that the wall thickness of the filtering medium container 4 is uniform from the viewpoint of moldability and pressure resisting performance. Warping and deformation is caused by the difference in coefficient of contraction or the residual stress increases depending on the shape in a case in which the wall thickness is nonuniform. The difference of the outer diameter to be the maximum diameter with respect to the outer diameter of the narrow portion, namely, the protruding portion in the radial direction of the filtering medium container 4 and the lid portion 5 is set to 9.0 mm or less and more preferably 5 mm or less. This makes it possible to mold the filtering medium container 4 having a draft angle of 1° or less on the inner side and the outer side thereof, and it is thus possible to achieve thinning of the shape by decreasing the maximum diameter but without decreasing the required amount of filtering medium.

The filtering medium 3 is composed of molded activated carbon 9 and a hollow fiber membrane 10, and these are disposed along the central axis direction of the filtering medium container 4. The molded activated carbon 9 is disposed on the bottom portion side of the filtering medium container 4 and the hollow fiber membrane 10 is disposed on the lid portion 5 side. The filtering medium 3 composed of these molded activated carbon 9 and hollow fiber membrane 10 is disposed to have a slight gap between it and the filtering medium container 4 on the outer side thereof. In other words, a gap is formed over the entire periphery of the filtering medium 3.

This annular gap continuous in the circumferential direction of filtering medium container 4 between the filtering medium 3 and the filtering medium container 4 is the first water passage 8 described above. The water which has flowed into the first water passage 8 through the water intake joint 6 flows therethrough as the first water passage 8 communicates with the internal hole (water intake port) of the water intake joint 6 as described above. The passage cross-sectional area of this first water passage 8, namely, the opening area of the cross section orthogonal to the central axis is 0.3 cm² or more and 8 cm² or less, preferably 1.0 cm² or more and 8.0 cm² or less, and more preferably 1.0 cm² or more and 5.5 cm² or less. The pressure loss increases and it is thus impossible to secure a sufficient water flow rate when the area is smaller than 0.3 cm². In addition, the amount of the filtering medium decreases and it is thus impossible to obtain sufficient filtering performance when the area is larger than 8 cm². It is more favorable that the passage cross-sectional area is 1.0 cm² or more in order to achieve thinning. In addition, as another aspect, it is preferable that the average of the passage cross-sectional area is 3.0 cm² or more and 6.0 cm² even in a case in which the opening area of the passage cross-sectional area is in the above range and a case in which it is out of the above range. Here, the average of the passage cross-sectional area is a value obtained by determining the cross-sectional areas of the cross sections in the direction perpendicular to the passage at three or more points of the passage and averaging them. Specifically, it can be determined by determining the cross-sectional areas at two points in the vicinity of the entrance and exit of the passage and the point at which the passage is equally divided (the number of points to be determined - 1) as the remaining point and averaging them, and the like. It is the average of the cross-sectional areas at three points in total of two points in the vicinity of the entrance and exit of the passage and one point obtained by equally dividing the passage into two parts when the average of three points is determined. Furthermore, it is preferably the average of five or more points (the average of the cross-sectional areas at five points in total of two points in the vicinity of the entrance and exit of the passage and three points obtained by equally dividing the passage into four parts). Alternatively, as a method for measuring the average of five points, for example, the inner diameter of the filtering medium container 4 and the approximate shape of the filtering medium 3 may be measured at both end portions of the filtering medium 3 and the places obtained by equally dividing the filtering medium 3 into four parts in the longitudinal direction and the average of the passage cross-sectional areas may be calculated.

Here, the hollow fiber membrane 10 is accommodated in a cylindrical hollow fiber membrane case 11, and the hollow fiber membrane 10 is thus separated by the hollow fiber membrane case 11 without directly communicating with the first water passage 8 as the side face side thereof is closed. Hence, the water which has flowed into the first water passage 8 through the water intake joint 6 flows to the bottom portion side of the filtering medium container 4, namely, the molded activated carbon 9 side without directly flowing to the hollow fiber membrane 10 side.

Incidentally, the hollow fiber membrane case 11 is also formed of an ABS resin or the like. In addition, as the hollow fiber membranes 10, those that are commonly used as the filtering medium of a water purifier-use cartridge can be used.

Specifically, for example, those composed of various kinds of materials such as a cellulose-based material, a polyolefin-based material (polyethylene, polypropylene), a polyvinyl alcohol-based material, an ethylene-vinyl alcohol copolymer, a polyether-based material, a polymethyl methacrylate (PMMA)-based material, a polysulfone-based material, a polyacrylonitrile-based material, a polytetrafluoroethylene-based material (Teflon (registered trademark)), a polycarbonate-based material, a polyester-based material, a polyamide-based material, and an aromatic polyamide-based material can be used. Among these, those composed of a polyolefin-based material, a polysulfone-based material, and the like are used from the viewpoint of handleability and processing characteristics.

This hollow fiber membrane 10 is one in which the hollow fiber membranes bundled in a loop shape are glued and fixed with a urethane resin, an epoxy resin, or the like on the lid portion 5 side (exit side) and the end portion is open so as not to be blocked by the resin, and it is accommodated and fixed in the hollow fiber membrane case 11. The effective membrane area, namely, the effective filtering area of the hollow fiber membrane 10 having such a configuration is formed to be 0.4 m² or more and 0.8 m² or less, for example, about 0.64 m². Incidentally, the effective membrane area is calculated by the product of the outer diameter of the hollow fiber membrane, the length of the part that is not covered with the resin, and the number of the hollow fiber membranes. The hollow fiber membranes may be bundled into a U-shaped bundle or raschel knitted, but it is preferably raschel knitted since it is possible to increase the effective membrane area while shortening the length L1 of the hollow fiber membrane 10 to be described later.

In addition, as a part of the hollow fiber membrane case 11, a lid portion side cap 12 is provided at the opening portion on the lid portion 5 side thereof by being bonded. On the lid portion side cap 12, a cylindrical connecting tube 13 that is inserted in the internal hole of the water discharge joint 7 and communicates with the water discharge joint 7 is formed. By this, the purified water filtered by the hollow fiber membrane 10 is guided to the water discharge joint 7 through the connecting tube 13 and is sent to the water faucet side.

Incidentally, an O ring is interposed between the connecting tube 13 of the lid portion side cap 12 and the internal hole of the water discharge joint 7, and favorable watertightness is secured by this. In addition, the inner diameter on the filtering medium container 4 side of the internal hole of the water discharge joint 7 is formed to be larger than the inner diameter on the filtering medium container 4 side of the internal hole of the water intake joint 6. By this, the cartridge is prevented from being erroneously assembled as the internal hole of the water intake joint 6 and the connecting tube 13 do not fit together even if the erroneous connection of these is attempted at the time of assembly.

In addition, a protruding portion 14 is formed at the center portion (on the central axis) of the lid portion side cap 12. This protruding portion 14 is formed and disposed so as to be fitted in a fitting concave portion 5a (corresponding to the positioning of the invention) formed at the center portion of the lid portion 5. On the basis of such a configuration, the hollow fiber membrane case 11 accommodating the hollow fiber membrane 10 is prevented from rattling as the protruding portion 14 of the lid portion side cap 12 bonded to the hollow fiber membrane case 11 is fitted in the fitting concave portion 5a of the lid portion 5. In addition, the filtering medium 3 is prevented from being unevenly positioned in the filtering medium container 4 when the cartridge 1 is horizontally placed and the like. Furthermore, the central axis of the filtering medium 3 and the central axis of the lid portion 5 are disposed on the concentric axis by this structure, and thus the annular gap (the first water passage 8) between the filtering medium 3 and the filtering medium container 4 is equal over the entire periphery and it is possible to uniformly distribute the flow of the water which has flowed from the water intake joint 6.

A gap is provided at a part other than the fitting portion of the lid portion 5 with the lid portion side cap 12 between the lid portion side cap 12 and the lid portion 5, namely, between the lid portion 5 and the end portion on the side facing the lid portion 5 of the hollow fiber membrane case 11. The gap is preferably from 2.0 to 4.0 mm. It is possible to allow water to appropriately pass when the gap is 2.0 mm or more, and the space is saved when the gap is 4.0 mm or less.

Ribs (not illustrated) for increasing the strength are radially provided on the inner side of the lid portion 5. It is preferable that the ribs are radially provided from the inner center portion of the lid portion toward the outer side from the viewpoint of strength. For other configurations of the ribs, the same configuration as the rib 4b provided at the bottom portion can be adopted. The protruding portion 14 is formed on the lid portion side cap 12 and this protruding portion 14 is formed so as to be fitted in the fitting concave portion 5a of the lid portion 5, and it is thus possible to increase the pressure resistance of the lid portion 5 by this rib. However, the height of the rib is required to decrease toward the protruding portion (the center of the lid portion 5) in a case in which the protruding portion and the fitting concave portion are provided in reverse, that is, the fitting concave portion is provided on the lid portion side cap 12 and the protruding portion is provided on the lid portion 5. Accordingly, it is not preferable since the strength of the lid portion 5 decreases.

Incidentally, the face facing the internal hole of the water intake joint 6 of the lid portion side cap 12 is closed, and the water which has passed through the internal hole of the water intake joint 6 is guided in the radial direction of the lid portion side cap 12 and led to the first water passage 8.

The molded activated carbon 9 is formed into a cylindrical shape, the end portion on the bottom portion side of the filtering medium container 4 is glued to a bottom portion side cap 15 by a hotmelt, and the end portion on the hollow fiber membrane 10 side thereof is glued to a partition plate 16 with holes by a hotmelt. In other words, the molded activated carbon 9 is sandwiched and glued between the bottom portion side cap 15 and the partition plate 16, and it is configured such that flows inwardly in the radial direction between the bottom portion side cap 15 and the partition plate 16. The internal hole 9a of the molded activated carbon 9 serves as the second water passage in the invention, and it is disposed to communicate with the cylindrical water passing portion 16a formed at the center portion of the partition plate 16. In other words, the water passing portion 16a is inserted in the internal hole 9a (second water passage) of the molded activated carbon 9. In addition, three protrusions are provided on the outer periphery of the bottom portion side cap 15. By this protrusion, a gap is formed between the bottom portion side cap 15 and the side face of the filtering medium container 4 so that water flows to the bottom portion of the filtering medium container 4. This protrusion is preferably from 1.0 mm to 2.0 mm. Water hardly flows when the protrusion is smaller than 1.0 mm. Furthermore, when the cartridge 1 is horizontally placed, the first water passage 8 is biased to the bottom face side when being horizontally placed and it is difficult for water to flow to between the bottom portion side cap 15 and the bottom portion of the filtering medium container 4. The amount of filtering medium decreases and it is thus impossible to obtain sufficient filtering performance when the protrusion is larger than 2.0 mm. Incidentally, a cylindrical portion 15a is also formed on the center portion of the bottom portion side cap 15, and this cylindrical portion 15a is inserted in the internal hole 9a of the molded activated carbon 9. In addition, a groove is dug on the bottom portion side cap 15 and the partition plate 16, and this groove improves the adhesive property with the hotmelt.

In the case of the cartridge 1 in which the water intake port and the water discharge port are provided at one end portion as in the present embodiment, water is likely to be retained between the bottom portion side cap 15 and the bottom portion of the filtering medium container 4. Particularly, the end portion on the bottom face side of the molded activated carbon 9 is glued to the bottom portion side cap 15, and thus water does not flow from the end face on the bottom portion side of the molded activated carbon 9 toward the internal hole 9a. Accordingly, water is retained for a long time in some cases. Hence, it is preferable to set the outer diameter of the bottom portion side cap 15 to be smaller by from 0.5 mm to 1.0 mm than the inner diameter of the filtering medium container 4 to abut. By setting the diameters to be this range, it is possible to increase the amount of water flowing to the bottom portion and thus to prevent the water from being retained. It is not preferable that the difference in diameter is larger than 1.0 mm since rattling of molded activated carbon occurs and the amount of filtering medium decreases. In addition, the gap between the bottom portion side cap 15 and the filtering medium container 4 becomes narrow when the difference in diameter is smaller than 0.5 mm, and it is thus impossible to increase the amount of water flowing to the bottom portion.

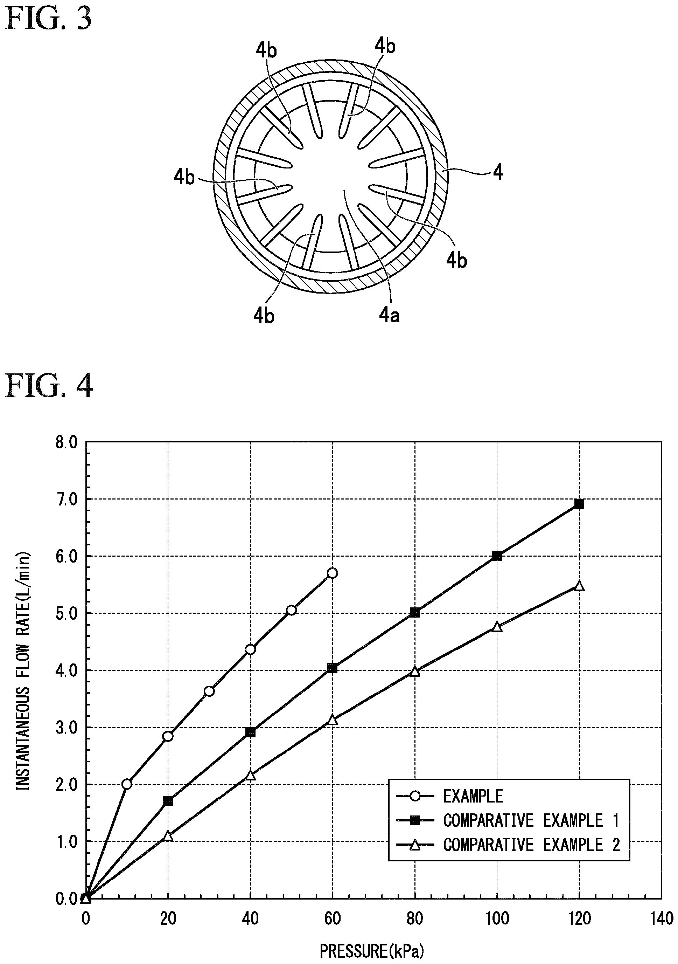

As illustrated in Fig. 3, a plurality of ribs 4b are radially formed on the bottom portion inner face 4a of the filtering medium container 4 from the center portion to the outer peripheral side of the bottom portion inner face 4a. These ribs 4b are formed in a linear shape to be convex toward the bottom portion side cap 15, namely, a shape of convex streak. By providing these ribs 4b, it is possible to prevent fitting between the connecting tube 13 and the internal hole of the water discharge joint 7 from deviating. Accordingly, it is possible to prevent the filtering medium 3 from being detached from the lid portion 5. In addition, by providing the ribs 4b, it is possible to enhance the pressure resistance of the bottom portion of the filtering medium container 4. As in the present embodiment, the water intake port and the water discharge port are provided at one end portion and further the end face of the molded activated carbon 9 is glued to the cap in the cartridge 1, and thus the part at which flow of water is poor is formed in the vicinity of the bottom portion and a part of water is retained for a long time in some cases. It is preferable to set the height of the rib 4b to from 2.0 to 5.0 mm in order to improve the flow of water since water does not accumulate in the bottom portion, and further the height is preferably from 3.0 to 4.0 mm. When the height is larger than 5.0 mm, the gap between the bottom portion side cap 15 and the bottom portion inner face 4a of the filtering medium container 4 decreases in size so that the flow of water worsens and water accumulates. In addition, it is impossible to increase the pressure resistance of the bottom portion of the filtering medium container 4 when the height is smaller than 2.0 mm.

In addition, a water permeable nonwoven fabric (not illustrated) is pasted on the outer peripheral surface of the molded activated carbon 9. As this nonwoven fabric, one having an appropriate mesh opening so as to be able to remove rough dust is used. The method for pasting the nonwoven fabric to the molded activated carbon 9 is not particularly limited as long as it is a method which does not inhibit the mesh opening of the nonwoven fabric and does not cause a problem on strength, processability, and the like, but a method in which the nonwoven fabric is pasted by heating a heat-fusible fiber is preferable since it is inexpensive and pasting can be conveniently conducted.

In addition, a water collecting pipe 17 is provided on the inner face on the internal hole 9a side. The water collecting pipe 17 substantially functions as the second water passage in the invention, it collects the raw water that has permeated through the molded activated carbon 9 and guides it to the water passing portion 16a side of the partition plate 16, and it is composed of a water permeable nonwoven fabric (not illustrated) abutting on the inner face on the internal hole 9a side and a cylindrical core material (not illustrated) provided to the inner side thereof.

The core material is one for reinforcing the molded activated carbon 9 in order to prevent the molded activated carbon 9 from being broken as water flows through the molded activated carbon 9. Such a core material may be any one as long as it can maintain the form of the molded activated carbon 9 when water passes therethrough to be filtered, and for example, one obtained by providing a great number of holes to a cylindrical resin in a lattice shape, one obtained by molding a fiber having a low melting point or the like through heating and molding the resultant into a pipe shape exhibiting water permeability, and the like are used. As the nonwoven fabric of the water collecting pipe 17, the same one as the nonwoven fabric pasted on the outer peripheral surface of the molded activated carbon 9 is used.

Here, the passage cross-sectional area of the water collecting pipe 17, namely, the opening area A1 of the cross section orthogonal to the central axis is formed such that the ratio of the opening area A1 with respect to the passage cross-sectional area A2 of the first water passage 8 described above, A1/A2 is from (1/0.2) to (1/5.3) and preferably (1/0.7) to (1/3.7). By forming the passage cross-sectional area A1 of the water collecting pipe 17 having such a size ratio with respect to the passage cross-sectional area A2 of the first water passage 8, it is possible to secure a sufficient water flow rate in the entire cartridge 1.

As described above, the partition plate 16 is bonded to the end portion on the hollow fiber membrane 10 side of the molded activated carbon 9 and also bonded to the hollow fiber membrane case 11. In other words, the partition plate 16 is attached to cover the opening on the molded activated carbon 9 side of the hollow fiber membrane case 11 accommodating the hollow fiber membranes 10. Accordingly, the inside of the water collecting pipe 17 (second water passage) and the inside of the hollow fiber membrane case 11 communicate with each other via this water passing portion 16a as the water passing portion 16a formed in the center portion of the partition plate 16 is inserted in and communicates with the internal hole 9a (second water passage) of the molded activated carbon 9, in detail, the water collecting pipe 17 as described above. In other words, water flowing inside the water collecting pipe 17 flows into the hollow fiber membrane case 11 through the water passing portion 16a.

Next, a method for using the cartridge 1 having a configuration as described above and a method for allowing water to flow in the cartridge 1 will be described.

In the cartridge 1, the entire length of the container main body 2, namely, the length L from the tip of the water intake joint 6 or water discharge joint 7 to the bottom face of the filtering medium container 4 is about from 220 mm to 300 mm and the ratio (L/d) of the length (L) of the container main body 2 to the maximum diameter (d) of the container main body 2 is 2.4 or more and 4.3 or less, and thus the cartridge 1 is small in overall size and has a slim shape. In addition, the water intake joint 6 and the water discharge joint 7 are provided on one side in the longitudinal direction, and it is thus possible to respectively connect an IN hose (coupler for water intake) and an OUT hose (coupler for water discharge) to these water intake joint 6 and water discharge joint 7 in the same direction.

Accordingly, the cartridge 1 can be used as a water purifier by being disposed, for example, in a narrow space in the under sink, more specifically, in a narrow space in the storage cabinet, between the upper and lower portions of the drawer, at the back of drawer, and in the lowermost drawer and connected to the IN hose and the OUT hose to be linked to a water faucet. At that time, the cartridge 1 can be used by being horizontally or vertically placed so that it can be arbitrarily disposed according to the form of the space to be the installation location without being limited by the placement manner.

By connecting the IN hose and the OUT hose in this manner, the water (raw water supplied from the water line) supplied through the IN hose passes through the water intake joint 6, is guided to the lid portion side cap 12, and flows into the first water passage 8. The water that has flowed into the first water passage 8 passes through the outer side of the hollow fiber membrane case 11 and flows into the side face (outer face) of the molded activated carbon 9. Incidentally, a certain degree of resistance is applied to the water when passing through the molded activated carbon 9, and the water that has passed through the outer side of the hollow fiber membrane case 11 approximately uniformly flows into the entire side face of the molded activated carbon 9.

The water that has passed through the molded activated carbon 9 and primarily filtered by this is collected in the water collecting pipe 17 (second water passage) provided in the internal hole 9a, passes through the water passing portion 16a, and is guided to the hollow fiber membrane case 11 side.

The water that has flowed into the inside of the hollow fiber membrane case 11 is secondarily filtered by the hollow fiber membrane 10 to be purified, then passes through the connecting tube 13 of the lid portion side cap 12, and is discharged to the water discharge joint 7. By this, the water purified by the cartridge 1 passes through the OUT hose and flows to the water faucet side.

In the cartridge 1 having such a configuration, the filtering medium 3 is formed such that the ratio (L2/L1) of the length L2 of the molded activated carbon 9 along the central axis direction of the filtering medium container 4 to the length L1 of the hollow fiber membrane 10 along the same central axis direction of the filtering medium container 4 is 2 or more and 4 or less and preferably 2.2 or more and 2.8 or less. When the ratio of L2 to L1 is smaller than 2, clogging occurs in early stages as the surface area of the molded activated carbon 9 decreases or the filtering ability decreases due to a decrease in the amount of filtering medium, and the cartridge 1 is required to be frequently exchanged. In addition, when the ratio is larger than 4, the hollow fiber membrane 10 is clogged in early stages and the hollow fiber membrane 10 is required to be frequently exchanged.

In addition, the mass of the molded activated carbon 9 with respect to the effective membrane area of the hollow fiber membrane 10 is 200 g/m² or more and 400 g/m² or less and preferably 275 g/m² or more and 380 g/m² or less.

Furthermore, the effective volume of the molded activated carbon 9 with respect to the effective membrane area of the hollow fiber membrane 10 is 600 cc/m² or more and 800 cc/m² or less and preferably 650 cc/m² or more and 750 cc/m² or less. Incidentally, the effective volume of the molded activated carbon 9 is the volume of only the cylindrical portion not including the volume of the internal hole 9a.

In addition, the proportion occupied by the volume of the respective members such as the filtering medium 3 composed of the molded activated carbon 9 and the hollow fiber membranes 10, the lid portion side cap 12, the hollow fiber membrane case 11, the partition plate 16, the water collecting pipe 17, and the bottom portion side cap 15 with respect to the inner volume of the filtering medium container 4 is 80% or more and 95% or less and preferably 87% or more and 93% or less.

On the basis of such a configuration, in the cartridge 1, the initial flow rate when the IN hose (coupler for water intake) is connected to the water intake joint 6, the OUT hose (coupler for water discharge) is connected to the water discharge joint 7, and the water injection pressure is set to 40 kPa is adjusted to 3.0 [liter/min] or more as can be seen from Experimental Examples to be described later as well. In addition, the chloroform filtering ability by a chloroform filtering ability test conducted in conformity to "JIS S 3201: 2010 household water purifier test method" is adjusted to 8000 liters or more.

As a modification of the present embodiment, an identification means to distinguish the water intake port from the water discharge port may be provided. Specifically, a concavo-convex mold, a label, and the like of a character or symbol for identification may be provided at the water intake port and the water discharge port, or in the vicinity thereof, or either one or both of the water intake port and the water discharge port may be colored.

The cartridge 1 of the present embodiment can be used in an under sink type water purifier (not illustrated). The under sink type water purifier is equipped with the cartridge 1, a storage cabinet for storing the cartridge 1, a water intake means for connecting the water intake port of the cartridge 1 to a water source (tap water or the like), a water discharge means for discharging purified water through the water discharge port of the cartridge 1, and the like. The storage cabinet is equipped with a means which can be held in the vicinity of the sink (preferably a space below the sink or the like) as described above, and it holds the under sink type water purifier. The water discharge means may be equipped with a water purifying nozzle (water faucet) on the sink. At the time of using the under sink type water purifier, water is supplied from the water source to the under sink type water purifier, the water purifying nozzle is opened, and the purified water purified by the under sink water purifier is obtained on the sink.

As described above, in the cartridge 1 of the present embodiment, the molded activated carbon 9 and hollow fiber membrane 10 as the filtering medium 3 are disposed along the central axis direction of the filtering medium container 4, and it is thus possible to have a slim structure in which the ratio (L/d) of the length (L) of the container main body 2 to the maximum diameter (d) of the container main body 2 is from 2.5 to 4.5. In addition, the cartridge 1 is configured such that water is allowed to flow from the first water passage 8 on the outer side of the molded activated carbon 9 toward the second water passage (internal hole 9a) in the interior thereof, and it is configured such that the hollow fiber membrane 10 is in touch with the second water passage, and it is thus possible to obtain a favorable water purifying function by allowing the molded activated carbon 9 and the hollow fiber membrane 10 to efficiently function. Accordingly, the cartridge 1 has a slim structure and a favorable water purifying function, and it can be thus easily disposed in, for example, a narrow space in the under sink without being limited by the placement manner.

In addition, the filtering medium 3 is configured such that the ratio (L2/L1) of the length (L2) of the molded activated carbon 9 along the central axis direction of the filtering medium container 4 to the length (L1) of the hollow fiber membrane 10 along the same central axis direction of the filtering medium container 4 is from 2 to 4 and preferably from 2.2 to 2.8, and it is thus possible to increase the filtering area of the molded activated carbon 9 as the length along the central axis direction of the molded activated carbon 9 is sufficiently longer as compared to the length of the hollow fiber membrane 10. Accordingly, it is possible to obtain a favorable water purifying function even if the cartridge 1 is thinned by decreasing the thickness in the radial direction of the molded activated carbon 9, namely, the thickness between the first water passage 8 and the second water passage (internal hole 9a).

In addition, the mass of the molded activated carbon 9 with respect to the effective membrane area of the hollow fiber membrane 10 is set to 200 g/m² or more and 400 g/m² or less and preferably 275 g/m² or more and 380 g/m² or less, and it is thus possible to obtain a favorable water purifying function as the entire cartridge 1 by enhancing the water purifying function by the molded activated carbon 9.

In addition, the effective volume of the molded activated carbon 9 with respect to the effective membrane area of the hollow fiber membrane 10 is set to 600 cc/m² or more and 800 cc/m² or less and preferably 650 cc/m² or more and 750 cc/m² or less, and it is thus possible to obtain a favorable water purifying function as the entire cartridge 1 by enhancing the water purifying function by the molded activated carbon 9.

In addition, the outside spacer and inside spacer described in Patent Literature 1 are not required, and the number of manufacturing steps and the number of parts thus decrease as compared to the water purifier-use cartridge of Patent Literature 1 so that it is advantageous in terms of industrial production as the cost decreases.

Incidentally, the technical scope of the invention is not limited to the above embodiment, and various modifications can be made without departing from the spirit of the invention.

In other words, the specific configuration of hollow fiber membrane and the specific configuration of molded activated carbon are not limited to the configurations of the above embodiments but appropriate modifications can be made.

### [Experimental Examples]

Next, Experimental Examples will be described.

### (Experimental Example 1: Flux test)

The cartridge of Example was manufactured based on the embodiment of the invention illustrated in Fig. 1 and Fig. 2. In the cartridge of this Example, the effective membrane area of the hollow fiber membrane (product name: EX270TH-25 manufactured by MITSUBISHI RAYON CO., LTD.) was set to 0.64 m², the effective volume of molded activated carbon (manufactured by KURARAY CHEMICAL CO., LTD.) was set to 454 cc, L/d was set to 3.4, and L2/L1 was set to 2.5. In addition, for comparison, commercially available water purifier-use cartridges using a hollow fiber membrane, granular activated carbon, and fibrous activated carbon as the filtering medium were prepared as Comparative Example 1 and Comparative Example 2. In the cartridge of Comparative Example 1, the effective membrane area of the hollow fiber membrane (product name: EX270H-25 manufactured by MITSUBISHI RAYON CO., LTD.) was 0.64 m², the capacity of granular activated carbon was 520 cc, the volume of fibrous activated carbon was 15 cc, L/d was 2.1, and L2/L1 was 1.9. In the cartridge of Comparative Example 2, the effective membrane area of the hollow fiber membrane was 0.54 m², the capacity of granular activated carbon was 592 cc, and the volume of fibrous activated carbon was 50 cc.

An IN hose (coupler for water intake) and an OUT hose (coupler for water discharge) having a length of 1500 mm were respectively attached to the water intake joint and the water discharge joint of the respective cartridges of Example, Comparative Example 1, and Comparative Example 2 thus prepared. Thereafter, A2 grade water adjusted to a water temperature of 20 ± 0.2°C as raw water was allowed to continuously flow through the cartridges for 10 minutes at a flow rate for filtration of 3.0 [liter/min] in conformity to "JIS S 3201: 2010 household water purifier test method", and the flux (amount flowing per unit time and unit area) was then measured. The results thus obtained are illustrated in the graph of Fig. 4.

From Fig. 4, in order to obtain an instantaneous flow rate (flux) of 3.0 [liter/min], a water injection pressure of about 20 kPa was required in Example but a water injection pressure of about 40 kPa was required in Comparative Example 1 and a water injection pressure of about 60 kPa was required in Comparative Example 2. In addition, the greatest instantaneous flow rate was obtained in Example at the same water injection pressure.

Accordingly, it has been found that the cartridge of Example requires a sufficiently lower pressure for obtaining a predetermined instantaneous flow rate (flux) as compared to the cartridges of Comparative Example 1 and Comparative Example 2 and a sufficiently high initial flow rate and a high flow rate for filtration are thus obtained.

### (Experimental Example 2: Chloroform filtering ability test)

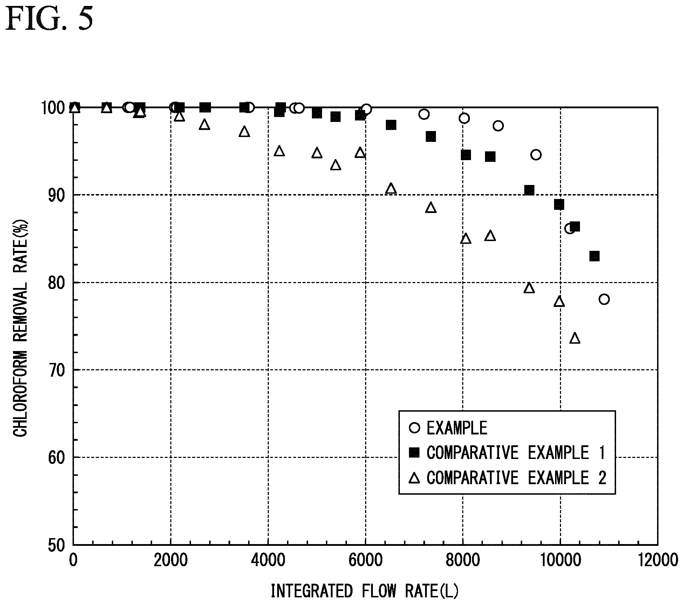

The same cartridges as the cartridges of Example, Comparative Example 1, and Comparative Example 2 used in Experimental Example 1 were prepared. Thereafter, the respective cartridges were subjected to the chloroform filtering ability test in conformity to "JIS S 3201: 2010 household water purifier test method" by using water adjusted so as to have a TOC (total organic carbon) concentration of 0.5 [mg/liter] or less through activated carbon filtration and a water temperature of 20 ± 0.2°C, and a chloroform concentration of 0.060 ± 0.012 [mg/liter] as raw water and constantly keeping the flow rate for filtration at 3.0 [liter/min]. The results thus obtained are illustrated in the graph of Fig. 5.

From Fig. 5, the integrated flow rate (lifetime) until the chloroform removal rate reached 80% was about 11000 liters in Example, and this was almost the same as in Comparative Example 1. In addition, it has been found that the cartridge of Example had a sufficiently longer lifetime as compared to that of Comparative Example 2 in which the integrated flow rate was about 9000 liters.

Accordingly, it has been found that the cartridge of Example has approximately the same lifetime (water purifying performance) and a sufficiently high flow rate for filtration as compared to that of Comparative Example 1. In addition, it has been found that the cartridge of Example has both a sufficiently longer lifetime (water purifying performance) and a sufficiently higher flow rate for filtration as compared to that of Comparative Example 2.

### INDUSTRIAL APPLICABILITY

According to the water purifier-use cartridge of the invention, the cartridge can be easily disposed, for example, even in a narrow space in the under sink without being limited by the placement manner since it has a slim structure and also a favorable water purifying function.

### EXPLANATIONS OF LETTERS OR NUMERALS

- 1: Water purifier-use cartridge
- 2: Container main body
- 3: Filtering medium
- 4: Filtering medium container
- 5: Lid portion
- 6: Water intake joint
- 7: Water discharge joint
- 8: First water passage
- 9: Molded activated carbon
- 9a: Internal hole (second water passage)
- 10: Hollow fiber membrane
- L: Length of container main body
- d: Maximum diameter of container main body

## Claims

1. A water purifier-use cartridge comprising:
a container main body having a tubular filtering medium container and a lid portion provided on an opening end side of the filtering medium container and
a filtering medium accommodated in the filtering medium container, wherein
the container main body is provided with a water intake port and a water discharge port,
a first water passage communicating with the water intake port is formed on an outer side of the filtering medium in the filtering medium container,
the filtering medium is constituted at least by activated carbon at least having a space constituting a second water passage in an interior and
a hollow fiber membrane configured so as to be in touch with the second water passage,
the hollow fiber membrane is disposed downstream the activated carbon,
the water purifier-use cartridge is configured such that water flows from the first water passage to the second water passage through the activated carbon, and
a ratio (L2/L1) of a length (L2) of the activated carbon to a length (L1) of the hollow fiber membrane accommodated in the filtering medium container is from 2.0 to 4.0.

2. A water purifier-use cartridge comprising:
a container main body having a tubular filtering medium container and a lid portion provided on an opening end side of the filtering medium container and
a filtering medium accommodated in the filtering medium container, wherein
the container main body is provided with a water intake port and a water discharge port,
a first water passage communicating with the water intake port is formed on an outer side of the filtering medium in the filtering medium container,
the filtering medium is constituted at least by activated carbon at least having a space constituting a second water passage in an interior and
a hollow fiber membrane configured so as to be in touch with the space constituting the second water passage,
the hollow fiber membrane is disposed downstream the activated carbon,
the water purifier-use cartridge is configured such that water flows from the first water passage to the second water passage through the activated carbon, and
an effective volume of the activated carbon with respect to an effective membrane area of the hollow fiber membrane is from 600 to 800 cc/m².

3. The water purifier-use cartridge according to claim 1 or 2, wherein a ratio (L/d) of a length (L) of the container main body to a maximum diameter (d) of the container main body is 2.4 or more and 5.0 or less.

4. The water purifier-use cartridge according to any one of claims 1 to 3, wherein the activated carbon and the hollow fiber membrane are disposed along a central axis direction of the filtering medium container.

5. The water purifier-use cartridge according to any one of claims 1 to 4, wherein a passage cross-sectional area of the first water passage is from 1.0 to 8.0 cm².

6. The water purifier-use cartridge according to any one of claims 1 to 5, wherein an average value of the passage cross-sectional area of the first water passage is from 3.0 to 6.0 cm²_{.}

7. The water purifier-use cartridge according to any one of claims 1 to 6, wherein a mass of the molded activated carbon with respect to an effective membrane area of the hollow fiber membrane is from 200 to 400 g/m².

8. The water purifier-use cartridge according to any one of claims 1 to 7, wherein a rib is radially provided from an inner center portion of the lid portion.

9. The water purifier-use cartridge according to any one of claims 1 to 8, wherein a concave positioning is provided at an inner center portion of the lid portion.

10. The water purifier-use cartridge according to any one of claims 1 to 9, wherein the container main body is provided with an identification means to distinguish the water intake port from the water discharge port.

11. The water purifier-use cartridge according to any one of claims 1 to 10, comprising a hollow fiber membrane case that houses the hollow fiber membrane and is fitted with the lid portion, wherein
an interval of from 2.0 to 4.0 mm is provided between the inner bottom face of the lid portion and a part other than the fitting portion at the lid portion side end portion of the hollow fiber membrane case.

12. The water purifier-use cartridge according to any one of claims 1 to 11, wherein the filtering medium container and the lid portion are bonded to each other.

13. The water purifier-use cartridge according to any one of claims 1 to 12, wherein the lid portion is provided with a water intake port and a water discharge port.

14. The water purifier-use cartridge according to any one of claims 1 to 13, wherein a protruding portion in a radial direction of the filtering medium container and the lid portion has a cylindrical shape of 9.0 mm or less.

15. The water purifier-use cartridge according to any one of claims 1 to 14, wherein the activated carbon is molded activated carbon.

16. An under sink type water purifier using the water purifier-use cartridge according to any one of claims 1 to 15.
